# EUROPÄISCHE PATENTSCHRIFT

(11) **EP 2 747 110 B1**
(45) Veröffentlichungstag und Bekanntmachung des Hinweises auf die Patenterteilung: **27.04.2016**
(21) Anmeldenummer: 13195968.6
(22) Anmeldetag: 06.12.2013
(51) Int. Cl.: H01H 9/54, H01H 37/54, H02H 5/04

(54) **Temperaturschutzschaltung**
Overtemperature protection circuit
Circuit de protection contre les hautes températures

(30) Priorität: 18.12.2012 DE 102012112487; 05.02.2013 DE 202013100509 U
(43) Veröffentlichungstag der Anmeldung: 25.06.2014
(73) Patentinhaber: Thermik Gerätebau GmbH, 99706 Sondershausen (DE)
(72) Erfinder: Liehr, Hans-Christian, 06526 Sangerhausen (DE); Hofsaess, Marcel P., 99706 Sondershausen (DE)
(74) Vertreter: Witte, Weller & Partner Patentanwälte mbB

(56) Entgegenhaltungen:
- DE-A1- 2 253 975
- DE-A1- 3 132 338
- DE-A1-102007 042 903
- DE-A1-102011 016 142
- DE-C2- 19 827 113

## Beschreibung

Die vorliegende Erfindung betrifft eine Temperaturschutzschaltung mit zwei elektrischen Verbindungsanschlüssen für ein zu schützendes Gerät, mit einem temperaturabhängigen Schalter, der ein temperaturabhängiges Schaltwerk, zwei stationäre Kontakte, die mit den Verbindungsanschlüssen verbunden sind, sowie ein an dem Schaltwerk angeordnetes und von diesem bewegtes Stromübertragungsglied mit zwei elektrisch miteinander verbundenen Gegenkontakten umfasst, die temperaturabhängig mit den beiden stationären Kontakten in Anlage sind und diese dann elektrisch leitend miteinander verbinden, wobei das temperaturabhängige Schaltwerk ein Federteil umfasst, das das Stromübertragungsglied trägt.

Ein in der Temperaurschutzschaltung verwendbarer temperaturabhängiger Schalter ist aus der DE 26 44 411 C2, der DE 198 27 113 C2 und der DE 10 2011 016 142 A1 bekannt.

Der bekannte Schalter weist ein Gehäuse mit einem becherartigen Unterteil auf, in das ein temperaturabhängiges Schaltwerk eingelegt ist. Das Unterteil wird durch ein Oberteil verschlossen, das durch den hochgezogenen Rand des Unterteils an diesem gehalten wird. Das Unterteil kann aus Metall oder Isolierstoff gefertigt sein, während das Oberteil aus Isolierstoff besteht.

In dem Oberteil sitzen zwei Kontaktnieten, deren innere Köpfe als stationäre Kontakte für das Schaltwerk dienen. Die Nietschäfte ragen durch Durchgangsöffnungen in dem Oberteil nach außen und gehen dort in äußere Köpfe über, die dem Außenanschluss des bekannten Schalters dienen. An diese äußeren Köpfe können unmittelbar Anschlusslitzen angelötet werden, wobei es auch bekannt ist, an den äußeren Köpfen Kontaktwinkel zu halten, an die Anschlusslitzen angelötet oder angecrimpt werden.

Das Schaltwerk trägt ein Stromübertragungsglied in Form einer Kontaktbrücke, auf deren Oberseite zwei über die Kontaktbrücke elektrisch miteinander verbundene Gegenkontakte vorhanden sind, die je nach Temperatur mit den beiden stationären Kontakten in Anlage gebracht werden und diese dann elektrisch miteinander verbinden.

Das temperaturabhängige Schaltwerk weist eine Bimetall-Schnappscheibe sowie eine Feder-Schnappscheibe auf, die zentrisch von einem Zapfen durchsetzt sind, der die Kontaktbrücke trägt. Die Feder-Schnappscheibe ist umfänglich in dem Gehäuse festgelegt, während sich die Bimetall-Schnappscheibe je nach Temperatur an einer Schulter des Unterteils oder an dem Rand der Feder-Schnappscheibe abstützt und dabei entweder die Anlage der Kontaktbrücke an den beiden stationären Kontakten ermöglicht oder aber die Kontaktbrücke von den stationären Kontakten abhebt, so dass die elektrische Verbindung zwischen den Außenanschlüssen unterbrochen wird.

Dieser temperaturabhängige Schalter wird in bekannter Weise dazu verwendet, elektrische Geräte vor Überhitzung zu schützen. Dazu wird der Schalter elektrisch mit dem zu schützenden Gerät und dessen Versorgungswechselspannung in Reihe geschaltet und mechanisch so an dem Gerät angeordnet, dass er mit diesem in thermischer Verbindung steht.

Unterhalb der Ansprechtemperatur der Bimetall-Schnappscheibe liegt die Kontaktbrücke an den beiden stationären Kontakten an, so dass der Stromkreis geschlossen ist und der Laststrom des zu schützenden Gerätes über den Schalter fließt. Erhöht sich die Temperatur über einen zulässigen Wert hinaus, so hebt die Bimetall-Schnappscheibe die Kontaktbrücke gegen die Stellkraft der Feder-Schnappscheibe von den stationären Kontakten ab, wodurch der Schalter geöffnet und der Laststrom des zu schützenden Gerätes unterbrochen wird.

Das jetzt stromlose Gerät kann sich dann wieder abkühlen. Dabei kühlt sich auch der thermisch an das Gerät angekoppelte Schalter wieder ab, der daraufhin selbsttätig wieder schließt.

Durch die Dimensionierung der Kontaktbrücke ist der bekannte Schalter in der Lage, verglichen mit anderen temperaturabhängigen Schaltern, bei denen der Laststrom des zu schützenden Gerätes unmittelbar über die Bimetall-Schnappscheibe oder eine ihr zugeordnete Feder-Schnappscheibe fließt, sehr viel höhere Betriebsströme zu führen, so dass er zum Schützen größerer elektrischer Geräte mit hoher Leistungsaufnahme eingesetzt werden kann.

Wie bereits erwähnt, schaltet sich der bekannte Schalter nach dem Abkühlen des von ihm geschützten Gerätes selbsttätig wieder ein. Während ein derartiges Schaltverhalten zum Schutz z.B. eines Haartrockners durchaus sinnvoll sein kann, ist dies überall dort nicht erwünscht, wo sich das zu schützende Gerät nach dem Abschalten nicht automatisch wieder einschalten darf, um Beschädigungen zu vermeiden. Dies gilt z.B. für Elektromotoren, die als Antriebsaggregate eingesetzt werden.

Die DE 198 27 113 C2 schlägt daher vor, einen sogenannten Selbsthaltewiderstand vorzusehen, der elektrisch parallel zu den Außenanschlüssen liegt. Der Selbsthaltewiderstand liegt bei geöffnetem Schalter elektrisch in Reihe zu dem zu schützenden Gerät, durch das wegen des Widerstandswertes des Selbsthaltewiderstandes jetzt nur ein unschädlicher Reststrom fließt. Dieser Reststrom reicht jedoch aus, den Selbsthaltewiderstand soweit aufzuheizen, dass er eine Wärme abstrahlt, die die Bimetall-Schnappscheibe oberhalb ihrer Schalttemperatur hält.

Der aus der DE 198 27 113 C2 bekannte Schalter kann auch mit einer stromabhängigen Schaltfunktion ausgestattet sein, wozu ein Heizwiderstand vorgesehen ist, der permanent in Reihe zu den Außenanschlüssen geschaltet ist. Der Laststrom des zu schützenden Gerätes fließt somit ständig durch diesen Heizwiderstand, der so dimensioniert werden kann, dass er bei Überschreiten einer bestimmten Laststromstärke dafür sorgt, dass die Bimetall-Schnappscheibe auf eine Temperatur oberhalb ihrer Ansprechtemperatur aufgeheizt wird, so dass der Schalter bei einem erhöhten Laststrom bereits öffnet, bevor das zu schützende Gerät sich unzulässig erwärmt hat.

Derartige Schalter haben sich im Alltagseinsatz bewährt. Sie werden insbesondere für die Absicherung von elektrischen Geräten mit hoher Leistungsaufnahme eingesetzt, weil sie über die Kontaktbrücke hohe Ströme führen können. Wenn derartige Schalter nicht im Nulldurchgang der Versorgungswechselspannung öffnen, bilden sich beim Abheben der Kontaktbrücke von den stationären Kontakten Lichtbögen zwischen den stationären Kontakten und den Gegenkontakten aus und der Spannungsabfall über dem Schalter sinkt auf die Brennspannung der Lichtbögen ab. Auf diesem Niveau verbleibt der Spannungsabfall bis die angelegte Versorgungswechselspannung die Polarität wechselt, also ihren nächsten Nulldurchgang erreicht. Dann werden die Lichtbögen gelöscht und der Schalter ist zuverlässig geöffnet.

In den üblichen Anwendungsfällen des bekannten Schalters mit hoher Abschaltleistung muss ein Laststrom hoher Stromstärke unterbrochen werden, was dazu führt, dass sich starke Lichtbögen ausbilden, was wiederum zu Kontaktabbrand und damit einhergehend langfristig zu einer Veränderung der Geometrie der Schaltflächen und oft auch zu einer Verschlechterung des Schaltverhaltens führt.

Beim unkontrollierten Überspringen im Inneren des Schalters können Lichtbögen sogar Schäden an der Bimetall-Schnappscheibe hervorrufen. Lichtbögen können ferner dazu führen, dass die Schaltflächen an den stationären Kontakten und den Gegenkontakten sozusagen zusammenkleben und sich die Kontaktbrücke nicht oder nicht mehr schnell genug von den stationären Kontakten ablöst.

Diese Probleme erhöhen sich mit der Anzahl der Schaltzyklen sogar noch, so dass sich das Schaltverhalten des bekannten Schalters im Laufe der Zeit verschlechtert. Vor diesem Hintergrund ist die Lebensdauer, also die Zahl der zulässigen Schaltzyklen der bekannten Schalter begrenzt, wobei die Lebensdauer auch von der Abschaltleistung, also der Stromstärke der geschalteten Ströme abhängt.

Gattungsgemäße Schalter der Anmelderin haben z.B. bei einer Versorgungswechselspannung von 250 Volt eine übliche Lebensdauer von 10.000 Schaltzyklen bei einem Laststrom von 10 Ampere, und 2.000 Schaltzyklen bei einem Laststrom von 25 Ampere.

Vor diesem Hintergrund besteht ein Bedarf an temperaturabhängigen Schaltern mit erhöhter Abschaltleistung und Lebensdauer.

Es ist bekannt, dass die Ausbildung von Lichtbögen zwar nicht vermieden werden kann, das aber die durch sie verursachten Schäden durch entsprechende Ausbildung der Schaltflächen verringert und hinausgezögert werden können. Dazu müssen besondere Geometrien und Materialien für die Kontakte verwendet werden, was die Konstruktion der bekannten Schalter aufwändig und kostenintensiv macht.

Um die Bimetall-Schnappscheibe vor Beschädigungen durch überspringende Lichtbögen zu schützen, wird zudem der Aufbau des bekannten Schalters so ausgelegt, dass die Bimetall-Schnappscheibe durch die Feder-Schnappscheibe und die Kontaktbrücke gegenüber Lichtbögen, die beim Öffnen des Schalters entstehen, abgeschirmt ist.

Obwohl sich diese Schutzmaßnahmen insgesamt bewährt haben, können sie die mit der Ausbildung von Lichtbögen einhergehenden Schäden nicht ganz verhindern, was die Lebensdauer und Abschaltleistung der bekannten Schalter auf die oben genannten, insbesondere bei Schaltern der Anmelderin üblichen Werte begrenzt.

Zudem ist von Nachteil, dass die beschriebenen Maßnahmen aufwändig und kostenintensiv sind.

Im Zusammenhang mit Relais und Schützen ist es bekannt, dass Lichtbögen durch elektromagnetische Felder beeinflusst und durch kapazitive sowie induktive Bauteile im Stromkreis gelöscht werden können. Darüber hinaus ist es bekannt, in Schützen durch die sogenannte permanentmagnetische Blasung einen entstehenden Lichtbogen so zu führen, dass er schnell erlischt.

Aus der DE 31 32 338 A1 ist es zudem bekannt, zu einem Schütz mit zwei Festkontakten und einer linear beweglichen Kontaktbücke ein steuerbares Halbleiterventil, beispielsweise einen Triac, parallel zu schalten, indem seine Stromanschlüsse mit den Festkontakten verbunden werden. Der Steuereingang des Triac wird über einen Längswiderstand und eine flexible Leitung, die in das Innere des Schützes führt, mit einem Anschluss an der Kontaktbrücke verbunden, der zwischen den Kontaktstellen zu den Festkontakten liegt.

Bei geschlossenem Schütz muss der Spannungsabfall über den Kontaktstellen so gering sein, dass sich für den Triac kein wirksamer Steuerstrom zwischen dem Steueranschluss und dessen Bezugsanschluss, der einem der beiden Stromanschlüsse entspricht, ausbildet. Der Triac ist dann nicht leitend, bleibt also stromlos.

Öffnet das Schütz infolge externer Ansteuerung, so entstehen zwei Lichtbögen, die für eine hinreichende Zeitspanne zu einer so großen Brennspannung führen müssen, dass die Kontaktbrücke zu dem Bezugsanschluss so lange eine hinreichende Potentialdifferenz aufweist, bis ein Steuerstrom durch den Längswiderstand fließt, der den Triac zünden kann. Hat der Triac gezündet, ist also leitend, so übernimmt er den durch den Schütz fließenden Laststrom, woraufhin die Lichtbögen erlöschen.

Durch die schnelle elektromagnetische Betätigung der Kontaktbrücke bewegt sie sich so schnell hinreichend weit von den Festkontakten weg, dass keine erneute Zündung des Triacs erfolgen kann, nachdem im Nulldurchgang der Versorgungswechselspannung der Laststrom unterbrochen wurde.

Dieses Verfahren hat also drei kritische Bedingungen. Der Spannungsabfall über den Kontaktstellen darf bei geschlossenem Schalter nicht zu groß und bei geöffnetem Schalter für eine bestimmte Zeitdauer nicht zu gering sein. Ferner muss die Abschaltgeschwindigkeit so groß sein, dass der Triac nicht erneut gezündet wird. Zudem ist konstruktiv zumindest problematisch, dass eine flexible Leitung in das Innere des Schützes geführt werden muss.

Aus der DE 2 253 975 A ist eine Schaltung bekannt, in der ein Lichtbogen, der sich beim Öffnen oder Schließen eines temperaturabhängigen Schalters in einem Wechselspannungskreis ausbildet, durch einen parallel zu dem Schalter angeordneten Triac gelöscht wird. Der hier eingesetzte temperaturabhängige Schalter ist ein Umschalter mit einem zentralen Anschluss, der temperaturabhängig mit einem Hauptkontakt, der in dem Laststromkreis des zu schützenden Gerätes angeordnet ist, oder einem Hilfskontakt verbunden wird, der permanent mit dem Steuereingang des Triac verbunden ist. Bei geschlossenem Hilfskontakt fließt dauerhaft ein Reststrom, der zu Verlustleistungen führt.

Aus der DE 10 2007 042 903 A1 ist es bekannt, einen Transistor mit Kollektor und Emitter parallel zu einer elektrischen Reihenschaltung aus zwei mechanisch miteinander gekoppelten mechanischen Schaltern zu schalten und die Basis mit dem Verbindungspunkt zwischen den beiden Schaltern zu verbinden. Der Transistor stellt so einen Bypass zu der Reihenschaltung der Schalter dar und sperrt bei geschlossenen und bei offenen Schaltern. Während des Öffnens der Schalter öffnet der Transistor und übernimmt den fließenden Strom, so dass die Schalter stromlos bleiben und die Gefahr der Lichtbogenbildung vermieden wird.

Ausgehend von diesem Stand der Technik ist es Aufgabe der vorliegenden Erfindung, bei der eingangs genannten Temperaturschutzschaltung die Lebensdauer und/oder Abschaltleistung des temperaturabhängigen Schalters auf konstruktiv einfache und kostengünstige Weise zu bessern.

Erfindungsgemäß wird diese Aufgabe bei der eingangs genannten Temperaturschutzschaltung dadurch gelöst, dass sie ein steuerbares Halbleiterventil für Wechselspannung mit zwei Stromanschlüssen und einem Steuereingang umfasst, wobei jeder der beiden Stromanschlüsse mit einem der Verbindungsanschlüsse und der Steuereingang zumindest bei geschlossenem temperaturabhängigem Schalter dadurch über das Schaltwerk elektrisch mit den Gegenkontakten an dem Stromübertragungsglied verbunden ist, dass das Federteil elektrisch leitend mit dem Stromübertragungsglied und zumindest bei geschlossenem temperaturabhängigem Schalter elektrisch mit dem Steuereingang verbunden ist.

Die Erfinder der vorliegenden Anmeldung haben in umfangreichen Versuchen zeigen können, dass das in der oben erwähnten DE 31 32 338 A1 beschriebene Prinzip der Lichtbogenlöschung überraschender Weise auch bei bestehenden temperaturabhängigen Schaltern der eingangs genannten Art einsetzbar ist. Wenn nämlich der Steuereingang des Halbleiterventils vorzugsweise über das Unterteil mit dem Schaltwerk des Schalters und über das Schaltwerk mit den Gegenkontakten auf dem Stromübertragungsglied verbunden wird, ist er bei dem aus der DE 26 44 411 C2 bekannten Schalter über die Feder-Schnappscheibe und/oder die Bimetall-Schnappscheibe elektrisch mit der Kontaktbrücke und über diese mit den Gegenkontakten verbunden. Weil hier die Kontaktbrücke selbst elektrisch leitend ist, ist der Steuereingang mit den beiden auf ihr vorgesehenen Gegenkontakten verbunden und liegt somit auf dem elektrischen Potential der beiden Gegenkontakte.

Die Kontaktbrücke muss jedoch selbst nicht elektrisch leitfähig sein, es reicht aus, wenn die auf ihr vorgesehenen Gegenkontakte elektrisch miteinander und mit dem Schaltwerk verbunden sind, so dass das Schaltwerk auf dem Potential der Gegenkontakte liegt.

Bei geschlossenem temperaturabhängigem Schalter entspricht dieses Potential dem Potential der Versorgungswechselspannung an dem Bezugs-Stromanschluss des Halbleiterventils, so dass kein Steuerstrom für das Halbleiterventil erzeugt wird. Öffnet der temperaturabhängige Schalter, so beginnen sich beim Abheben der Kontaktbrücke von den stationären Kontakten Lichtbögen auszubilden, die schnell eine Lichtbogenspannung von 10 Volt erreichen. Dadurch wird ein hinreichend hoher und lang andauernder Steuerstrom für das Halbleiterventil erzeugt, der zum Zünden des Halbleiterventils führt, das somit öffnet.

Sobald das Halbleiterventil zündet, übernimmt es den Laststrom und der temperaturabhängige Schalter wird stromlos, so dass die Lichtbögen erlöschen. Das Halbleiterventil schließt wieder, wenn die Betriebswechselspannung den Nulldurchgang erreicht. Während dieser Zeitpanne hat sich die Kontaktbrücke so weit von den stationären Kontakten entfernt, dass es nicht zu einem Überschlagen und erneutem Ausbilden von Lichtbögen kommt.

Dabei ist konstruktiv von Vorteil, dass kein bewegliches Kabel in das Innere des Schalters zu dem Stromüberragungsglied geführt werden muss, sondern dass unerwartet das temperaturabhängige Schaltwerk die elektrische Verbindung zwischen dem Steuereingang des Halbleiterventils und den Gegenkontakten auf dem Stromübertragungsglied herstellen kann. Überraschender Weise werden dabei die oben erwähnten Anforderungen an die Spannungsabfälle und an die Schaltgeschwindigkeit erfüllt.

Durch die erfindungsgemäße Verwendung eines steuerbaren Halbleiterventils für Wechselspannung werden überraschender Weise nicht nur die Lichtbögen schnell gelöscht, auch die Abschaltleistung und die Lebensdauer bestehender temperaturabhängiger Schalter werden deutlich erhöht.

Bei dem eingangs erwähnten Schalter der Anmelderin konnte bei einer Verdopplung des Laststromes auf 50 Ampere auch nach 20.000 Schaltzyklen keine Verschlechterung des Schaltverhaltens festgestellt werden.

Damit lassen sich bestehende temperaturabhängige Schalter der eingangs beschriebenen Art ohne konstruktive Änderungen für höhere Abschaltleistungen einsetzen und zeigen sogar dann längere Lebensdauern als in einer Temperaturschutzschaltung ohne lichtbogenlöschendes Halbleiterventil.

Diese bestehenden Schalter weisen in einer Ausgestaltung eine Feder-Schnappscheibe auf, die aus Bimetall gefertigt sein kann und das Stromübertragungsglied trägt sowie permanent mechanisch und elektrisch mit dem Unterteil verbunden ist. Hier ist das elektrisch leitende Stromübertragungsglied also permanent mit dem Steuereingang des Halbleiterventils verbunden.

Es sind aber auch Konstruktionen mit Bimetall- und Feder-Schnappscheibe bekannt, bei denen die Feder-Schnappscheibe zumindest nach dem vollständigen Öffnen des Schalters nicht mehr elektrisch mit dem Unterteil in Verbindung steht, weil sie von ihrer konvexen in ihre konkave Form umspringt. Zu Beginn des Öffnungsvorganges drückt die Feder-Schnappscheibe sich jedoch mit ihrem Rand noch innen an dem Unterteil ab, während die Bimetall-Schnappscheibe bereits beginnt, gegen die Kraft der Feder-Schnappscheibe, die dabei allmählich flachgedrückt wird, das Stromübertragungsglied von den stationären Kontakten abzuheben, so dass sich die Lichtbögen ausbilden.

Erst dann, wenn die Bimetall-Schnappscheibe die Feder-Schnappscheibe hinreichend weit flachgedrückt hat, springt die Feder-Schnappscheibe um. Bis zu diesem Zeitpunkt ist sie jedoch elektrisch mit dem Unterteil verbunden, so dass der Steuerstrom zu dem Steuereingang gelangen kann. Überraschender Weise reicht der Zeitraum bis zu diesem Zeitpunkt aus, um das Halbleiterventil zu zünden.

Für die erfindungsgemäße Verwendung des Halbleiterventils ist es daher nicht erforderlich, dass der Steuereingang permanent elektrisch mit dem Schaltwerk verbunden ist. Wichtig ist nur, dass diese Verbindung zumindest bei geschlossenem Schalter und danach so lange besteht, bis das Halbleiterventil zündet, also leitend wird.

Die Erfinder der vorliegenden Anmelddung haben erstmals erkannt, dass bestimmte bestehende temperaturabhängige Schalter eine elektrische Verbindung zwischen den Gegenkontakten auf dem Stromübertragungsglied und dem Unterteil bereitstellen, die zu Beginn eines Öffnungsvorganges zumindest solange erhalten bleibt, dass durch sich ausbildende Lichtbögen ein Halbleiterventil gezündet werden kann.

Das Halbleiterventil muss dazu lediglich an geeigneter Stelle parallel mit den Zuleitungen zu dem temperaturabhängigen Schalter verbunden werden. Zusätzlich ist lediglich noch eine Steuerleitung von dem Steuereingang zu dem Schaltwerk erforderlich. Das Halbleiterventil kann dabei dort montiert werden, wo entsprechender Montageraum vorhanden ist. Ferner kann der Montageraum so ausgewählt werden, dass das Halbleiterventil nicht im Inneren von Spulenwicklungen angeordnet wird, sondern dort, wo niedrigere Temperaturen vorherrschen, die die Funktion des Halbleiterventils nicht beeinträchtigen.

Das Halbleiterventil muss also nicht direkt am Gerät angeordnet werden. Es kann daher - beispielsweise über einen Stecker - auch erst dann an dem Gerät montiert werden, wenn der temperaturabhängige Schalter an dem Gerät verbaut und das Geräte imprägniert wurde, was insbesondere bei Elektromotoren und Spulen von Vorteil ist.

Bei dieser Maßnahme ist z.B. von Vorteil, dass das Halbleiterventil jederzeit nachgerüstet und/oder ausgetauscht werden kann.

Die vorliegende Erfindung ermöglicht es nun auch erstmals, einfach aufgebaute und damit preiswerte temperaturabhängige Schalter für Abschaltleistungen einzusetzen, für die sie ohne das zusätzliche Halbleiterventil nicht ausgelegt sind.

Damit können jetzt auch erstmals zuverlässig temperaturabhängige Schalter für hohe Stromstärken eingesetzt werden, die als Stromübertragungsglied keinen Kontaktteller sondern ein Federteil aufweisen, das die beiden Gegenkontakt trägt oder an dem die beiden Gegenkontakte ausgebildet sind. Das Federteil kann ein Bimetallteil, insbesondere eine Bimetall-Schnappscheibe sein, die nicht nur für die temperaturabängige Schaltfunktion sorgt, sondern gleichzeitig auch noch den Strom führt, wenn der Schalter geschlossen ist.

Weil erfindungsgemäß die beim Öffnen des Schalters an den beiden Gegenkontakten entstehenden Lichtbögen durch das Halbleiterventil sehr schnell wieder gelöscht werden, wird die Bimetallscheibe beim Öffnen des Schalters nicht oder nur so geringfügig geschädigt, dass verglichen mit einem Betrieb ohne Halbleiterventil die Lebensdauer und die zulässige Schaltleistung dieser sehr einfach aufgebauten temperaturabhängigen Schalter deutlich erhöht werden.

Die Erfinder sind also nicht den im Stand der Technik bisher beschrittenen Weg gegangen, nämlich die Konstruktion der bekannten Schalter im Hinblick auf die mit Lichtbögen einhergehende Problematik weiter zu optimieren, sondern haben den auf den ersten Blick ungewöhnlichen und auch nicht erfolgversprechenden Weg gewählt, zusätzlich ein Halbleiterventil einzusetzen, obwohl dies zudem noch zu zusätzlichen Kosten führt.

Die zusätzlichen Kosten werden jedoch nach Erkenntnis der Erfinder dadurch mehr als aufgefangen, dass nicht nur die Lebensdauer bestehender temperaturabhängiger Schalter erhöht wird, sondern dass bestehende Schalter wider Erwarten jetzt für höhere Abschaltleistungen eingesetzt werden können.

Die Erfinder haben also eine Schaltung geschaffen, die für temperaturabhängige Schalter mit Bimetall-Schaltwerk der eingangs genannten Art in Wechselstromkreisen eine elektronische Lichtbogenlöschung bewirkt.

Die der Erfindung zugrundeliegende Aufgabe wird auf diese Weise vollkommen gelöst.

Unter einem "steuerbaren Halbleiterventil" wird im Rahmen der vorliegenden Erfindung ein Halbleiterbauteil verstanden, dass ohne Ansteuersignal an seinem Steuereingang eine an seine Stromanschlüsse angelegte Wechselspannung sperrt und bei Anliegen einer Steuerspannung durchschaltet, also leitend wird oder in anderen Worten öffnet. In besonderen Ausführungen bleiben die Halbleiterventile auch dann leitend, wenn der Steuerstrom abgeschaltet wird, sie schließen jedoch wieder, wenn die angelegte Wechselspannung ihren Nulldurchgang erreicht, also ihre Polarität ändert.

Eine erfindungsgemäße Temperaturschutzschaltung wird in den Versorgungswechselstromkreis eines vor Überhitzung zu schützenden elektrischen Gerätes geschaltet, wobei zwischen den beiden Verbindungsanschlüssen das Halbleiterventil sowie zumindest ein temperaturabhängiger Schalter verschaltet sind.

Ein wichtiges Ausführungsbeispiel für das erfindungsgemäß eingesetzte Halbleiterventil ist ein Triac, also eine Zweirichtungs-Thyristortriode, wie sie beispielsweise zur Phasenanschnittsteuerung verwendet wird. Das Halbleiterventil kann als elektronisches Bauteil mit Halbleiterschichtstruktur und drei Anschlüssen ausgebildet sein. Es ist aber auch möglich, das Halbleiterventil durch diskrete Bauteile aufzubauen, die in ihrer Zusammenwirkung die Funktion eines Triac erfüllen.

Vorzugsweise weist der Schalter ein das Schaltwerk aufnehmendes Gehäuse auf, das ein Unterteil sowie ein Oberteil aufweist, an dessen Innenseite die stationären Kontakte angeordnet sind.

Das Federteil kann ein länglicher Bimetallarm oder ein Federarm sein, der an seinem freien Ende das Stromübertragungsglied trägt und an seinem anderen Ende an dem Gehäuse festgelegt ist und dort mit einem Anschluss für den Steuereingang augebildet ist. Wenn das Federteil ein Federarm ist, ist ihm ein Bimetallteil zugeordnet, das das freie Ende des Federarms temperaturabhängig von den stationären Kontakten wegbewegt, so dass der Schalter öffnet. Bei diesen Ausführungen ist der Steuereingang permanent mit dem temperaturabhängigen Schaltwerk verbunden.

Das Federteil ist jedoch bevorzugt eine Bimetall-Schnappscheibe, die zentrisch das Stromübertragungsglied trägt und sich zumindest bei geschlossenem temperaturabhängigem Schalter an dem Unterteil abstützt.

Alternativ ist das Federteil eine Feder-Schnappscheibe, die sich zumindest bei geschlossenem temperaturabhängigem Schalter an dem Unterteil abstützt, wobei eine Bimetall-Schnappscheibe vorgesehen ist, die das Stromübertragungsglied oberhalb ihrer Schalttemperatur von den stationären Kontakten abhebt.

Diese Maßnahmen sind konstruktiv von Vorteil, denn sie setzen als temperaturabhängigen Schalter einen bestehenden Schalter ein.

Während es durchaus genügt, wenn lediglich eine Bimetall-Schnappscheibe vorgesehen ist, die sowohl den Kontaktdruck herstellt als auch für das temperaturabhängige Öffnen sorgt, kann durch eine Feder-Schnappscheibe, die zusätzlich zur Bimetall-Schnappscheibe oder allein den Kontaktdruck bewirkt, die Bimetall-Schnappscheibe in ihrer Tieftemperaturstellung mechanisch entlastet werden, was zu einer größeren Langzeitstabilität ihres Schaltverhaltens beiträgt.

Der zum Zünden des Halbleiterventils erforderliche, geringe Strom kann aufgrund erster Dauerversuche in den Betriebsräumen der Anmelderin sowohl durch die Feder-Schnappscheibe als auch durch die Bimetall-Schnappscheibe geleitet werden.

Das Unterteil kann aus elektrisch leitendem Material oder aus Isoliermaterial gefertigt sein. Wenn das Unterteil aus Isoliermaterial gefertigt ist, weist es an seinem Boden eine Elektrode auf, auf der sich die Bimetall- und/oder Feder-Schnappscheibe abstützt und die aus dem Unterteil herausführt und dort mit dem Steuereingang verbunden ist.

Wenn das Unterteil dagegen selbst elektrisch leitend ist, muss der Steuereingang lediglich mit außen mit dem Unterteil verbunden werden, was konstruktiv von Vorteil ist.

Wenn das Federteil permanent elektrisch mit dem Unterteil verbunden ist, ist auf konstruktiv einfache und preiswerte Weise sichergestellt, dass bei einem Öffnungsvorgang entstehende Lichtbögen zu einem Steuerstrom zu dem Steuereingang führen.

Weiter ist es bevorzugt, wenn zwischen den stationären Kontakten ein Selbsthaltewiderstand angeschlossen ist, wobei vorzugsweise zwischen einen der stationären Kontakte und den zugeordneten Verbindungsanschluss ein Heizwiderstand geschaltet ist.

Hier ist von Vorteil, dass selbsthaltende Schalter und/oder Schalter mit definierter Stromabhängigkeit eingesetzt werden können. Die Erfinder der vorliegenden Anmeldung haben nämlich anhand von Versuchen erkannt, dass wider Erwarten ein Selbsthaltewiderstand und/oder ein Heizwiderstand die erfindungsgemäße Verwendung des Halbleiterventils nicht beeinträchtigen.

Weiter ist es bevorzugt, wenn das Stromübertragungsglied ein elektrisch leitender Kontaktteller ist, auf dem die beiden Gegenkontakte angeordnet sind, die über den Kontaktteller elektrisch miteinander verbunden sind, wobei der Kontaktteller elektrisch leitend mit dem Schaltwerk verbunden ist.

Diese Maßnahme ist ebenfalls konstruktiv von Vorteil. Der Kontaktteller kann auf seiner Oberseite die Gegenkontakte aufweisen, durch zwei beschichtete Kontaktflächen auf der Oberseite ausgebildet sein können. Die Oberseite des Kontakttellers kann auch selbst die Gegenkontakte bilden, oder durchgehend als Kontaktfläche ausgebildet sein, wie dies in der DE 10 2011 016 142 A1 beschrieben ist.

Der Kontaktteller kann als kreisrunde Kontaktscheibe oder als längliche Kontaktbrücke ausgebildet sein.

Die mit der Erfindung verbundenen Vorteile bestehen neben der höheren Abschaltleistung und längeren Lebensdauer der eingesetzten temperaturabhängigen Schalter auch darin, dass das Halbleiterventil, insbesondere der Triac nur bei entstehendem Lichtbogen kurzzeitig den Laststrom führt, so dass es nicht zu einer übermäßigen Erwärmung des Triac kommt. Eine Kühlung für das Halbleiterventil ist nicht erforderlich.

Während des "normalen" Dauerbetriebes wird der Laststrom durch den temperaturabhängigen Schalter geführt, der ebenfalls keine Kühlung benötigt.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: einen schematischen, nicht maßstabsgetreuen Längsschnitt durch einen temperaturabhängigen Schalter, wie er in der neuen Temperaturschutzschaltung aus Fig. 2 eingesetzt werden kann; und
- Fig. 2: in einer schematischen Darstellung ein erstes Ausführungsbeispiel für die neue Temperaturschutzschaltung, in der der Schalter aus Fig. 1 verwendet wird.

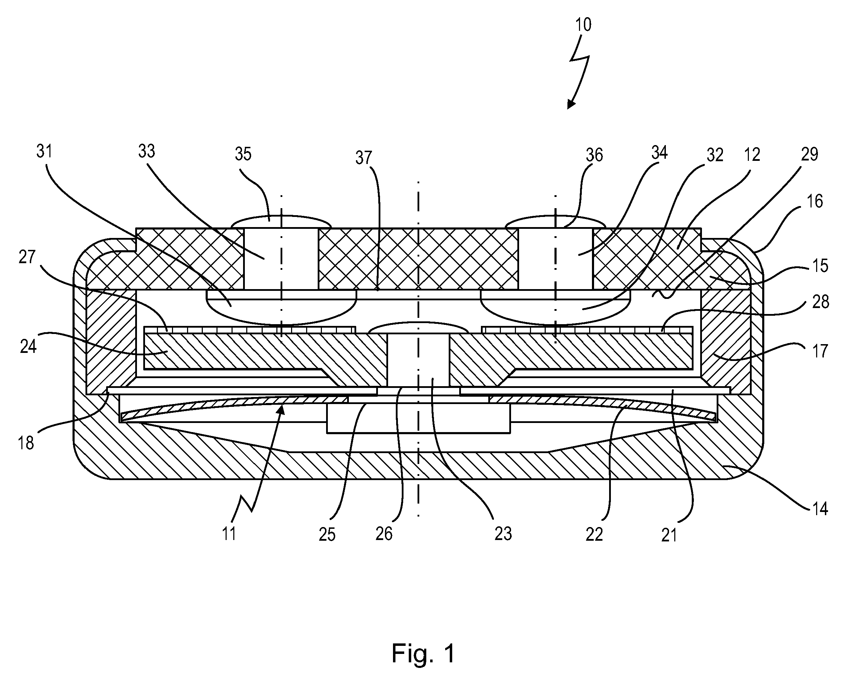

In Fig. 1 ist mit 10 ein temperaturabhängiger Schalter bezeichnet, der ein temperaturabhängiges Schaltwerk 11 umfasst, das in einem Gehäuse 12 untergebracht ist.

Das Gehäuse 12 umfasst ein aus elektrisch leitfähigem Material bestehendes Unterteil 14 sowie ein dieses verschließendes Oberteil 15 aus Isoliermaterial, das durch einen umgebördelten Rand 16 des Unterteils 14 an diesem gehalten wird. Zwischen dem Unterteil 14 und dem Oberteil 15 ist ein Ring 17 angeordnet, der sich auf einem Absatz 18 des Unterteils 14 abstützt und dort eine Feder-Schnappscheibe 21 des Schaltwerkes 11 an ihrem Rand einklemmt die somit permanent elektrisch leitend mit dem Unterteil 14 verbunden ist.

Das Schaltwerk 11 umfasst zusätzlich zu der Feder-Schnappscheibe 21 noch eine Bimetall-Schnappscheibe 22, die zusammen mit der Feder-Schnappscheibe 21 zentrisch von einem zapfenartigen Niet 23 durchgriffen wird, durch den diese mit einem Stromübertragungsglied in Form eines aus elektrisch leitfähigem Material gefertigten Kontakttellers 24 mechanisch und elektrisch verbunden sind. Der Niet 23 weist einen ersten Absatz 25 auf, auf dem die Bimetall-Schnappscheibe 22 mit radialem und axialem Spiel sitzt, wobei ein zweiter Absatz 26 vorgesehen ist, auf dem die Feder-Schnappscheibe 21 ebenfalls mit radialem und axialem Spiel sitzt.

Die Bimetall-Schnappscheibe 22 stützt sich mit ihrem umlaufenden Rand innen in dem Unterteil 14 ab.

Der Kontaktteller 24 weist in Richtung des Oberteils 15 zwei über den Kontaktteller 24 elektrisch miteinander verbundene, großflächige Gegenkontakte 27 und 28 auf, die mit zwei an der Innenseite 29 des Oberteils 29 angeordneten stationären Kontakten 31, 32 zusammenwirken, die innere Köpfe von Kontaktnieten 33, 34 sind, die das Oberteil 15 durchgreifen und mit ihren äußeren Köpfen als Außenanschlüsse 35, 36 dienen.

In der in Fig. 1 gezeigten Schaltstellung drücken Feder-Schnappscheibe 21 und Bimetall-Schnappscheibe 22 den Kontaktteller 24 gegen die stationären Kontakte 31 und 32, die über die Gegenkontakte 27, 28 somit miteinander verbunden sind; der Schalter 10 ist also geschlossen.

Erhöht sich die Temperatur der Bimetall-Schnappscheibe 22 über ihre Ansprechtemperatur hinaus, so schnappt sie von der gezeigten konvexen in eine konkave Form um und stützt sich dabei mit ihrem Rand im Bereich des Ringes 17 ab und zieht den Kontaktteller 24 gegen die Kraft der Feder-Schnappscheibe 21 von den stationären Kontakten 31, 32 weg; der Schalter 10 ist jetzt geöffnet.

Der insoweit beschriebene Schalter ist aus der DE 26 44 411 C2 und der DE 198 27 113 C2 bekannt. Wenn sich die Temperatur jetzt wieder erniedrigt, würde der aus der DE 26 44 411 C2 bekannte Schalter wieder in den in Fig. 1 gezeigten, geschlossenen Zustand zurückschnappen.

Um dieses ungewollte Wiedereinschalten zu verhindern, ist an der Innenseite des Oberteils 15 ein schematisch angedeuteter Selbsthaltewiderstand 37 vorgesehen, der elektrisch in Reihe zwischen die beiden stationären Kontakte 31, 32 geschaltet ist und bei geöffnetem Schalter 10 einen Reststrom führt, durch den er sich so weit aufheizt, dass die Bimetall-Schnappscheibe 22 auf einer Temperatur oberhalb ihrer Rücksprungtemperatur gehalten wird.

Während der Kontaktteller 24 in dem gezeigten Ausführungsbeispiel von einem temperaturabhängigen Schaltwerk 11 mit einer kreisrunden Feder-Schnappscheibe 21 und einer kreisrunden Bimetall-Schnappscheibe 22 bewegt wird, ist es auch möglich, auf die Feder-Schnappscheibe zu verzichten und den Kontaktteller 24 nur durch eine Bimetall-Schnappscheibe 22 zu halten und zu bewegen. Ferner kann statt eines kreisrunden Kontakttellers 24 auch eine längliche Kontaktbrücke eingesetzt werden.

Während in dem gezeigten Ausführungsbeispiel der Kontaktteller 24 zentrisch von der Bimetall-Schnappscheibe 22 und Feder-Schnappscheibe 21 gehalten werden, ist es auch möglich, eine einseitig eingespannte, längliche Bimetallfeder zu verwenden, die an ihrem freien Ende eine Kontaktbrücke trägt, wie es beispielsweise aus der DE 10 2004 036 117 A1 bekannt ist.

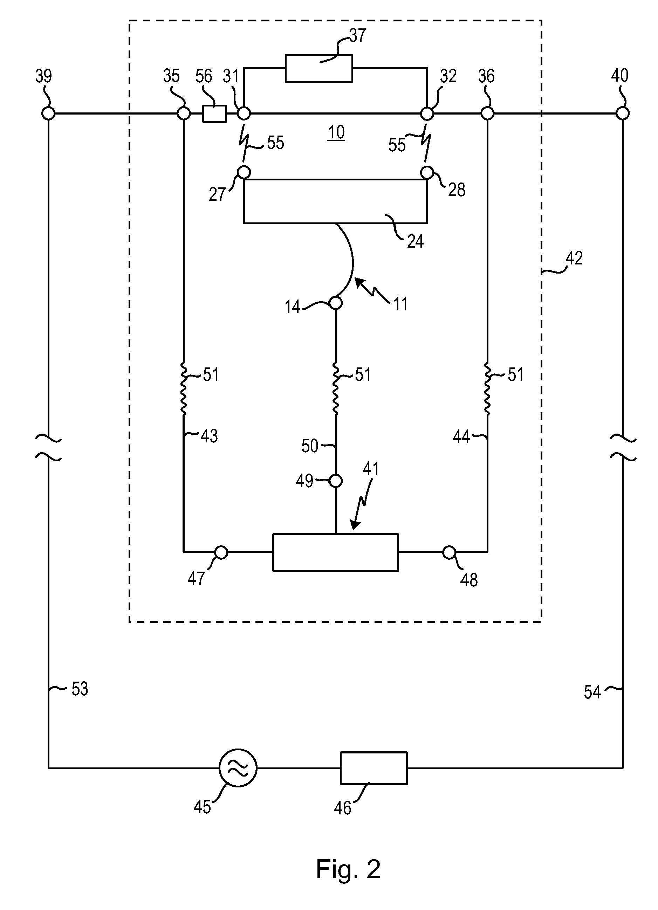

In Fig. 2 ist zwischen zwei Verbindungsanschlüssen 39, 40 die Zusammenschaltung des temperaturabhängigen Schalters 10 aus Fig. 1 mit einem steuerbaren Halbleiterventil 41 zu einer gestrichelt umrandeten Temperaturschutzschaltung 42 gezeigt, die über die Verbindungsanschlüsse 39, 40 mit einer Reihenschaltung aus einer Wechselspannungsquelle 45 und einem zu schützenden elektrischen Gerät 46 verbunden ist.

Der Schalter 10 ist in Fig. 2 lediglich schematisch angedeutet; die schematisch angedeuteten konstruktiven Merkmale sind mit den Bezugszeichen wie in Fig. 1 versehen. Zwei Anschlussleitungen 43, 44 sind mit den beiden Außenanschlüssen 35, 36 des Schalters 10 verbunden, die wiederum mit den stationären Kontakten 31, 32 verbunden sind, die in der in Fig. 1 gezeigten Schaltstellung über den Kontaktteller 24 kurzgeschlossen sind, der von dem Schaltwerk 11 getragen wird. Die Außenanschlüsse 35, 36 sind mit den Verbindungsanschlüssen 39 bzw. 40 der Temperaturschutzschaltung 42 verbunden.

Der Kontaktteller 24 ist über das Schaltwerk 11, also hier die Feder-Schnappscheibe 21 elektrisch mit dem Unterteil 14 verbunden, das in Fig. 2 durch einen Kreis als Anschluss gekennzeichnet ist. Das Halbleiterventil 41 weist zwei Stromanschlüsse 47, 48 auf, die jeweils mit einer der Anschlussleitungen 43, 44 verbunden sind. Ferner weist das Halbleiterventil 41 einen Steuereingang 49 auf, der mit dem Unterteil 14 über eine Steuerleitung 50 verbunden ist.

Durch gewellte Abschnitte 51 in den Anschlussleitungen 43, 44 und der Steuerleitung 50 ist angedeutet, dass das Halbleiterventil 41 an jeder geeigneten Stelle an die Anschlussleitungen 43, 44 angeschlossen werden kann. Die gewellten Anschlüsse 51 können als Stecker ausgebildet sein.

Das Halbleiterventil 41 kann somit bei bestehender oder festliegender Verkabelung des Schalters 10 mit der Wechselspannungsquelle 45 und dem Gerät 46 beliebig an die Anschlussleitungen 43, 44 oder externe Leitungen 53, 54 angeschlossen werden, die dazu nicht neu verlegt, sondern nur an passender Stelle für den Anschluss an die Stromanschlüsse 47, 48 abisoliert werden müssen. Lediglich die Steuerleitung 50 muss noch zu dem Schalter 10 verlegt und dort außen mit dem Unterteil 14 verbunden werden, wodurch die elektrische Verbindung zu dem Schaltwerk 11 und über dieses zu dem Kontaktteller 24 hergestellt wird.

Auf diese Weise kann ein bestehender Schalter 10 mit dem Halbleiterventil 41 verbunden werden, das auf die eingangs geschilderte Weise dafür sorgt, dass die sich beim Öffnen des Schalters 10 zwischen dem Gegenkontakten 27, 28 und den stationären Kontakten 31, 32 bildenden Lichtbögen sehr schnell gelöscht werden, die in Fig. 2 schematisch mit 55 bezeichnet sind. In Fig. 2 ist der Schalter 10 in einem Schaltzustand gezeigt, in dem sich der Kontaktteller 24 gerade von den stationären Kontakten 31, 32 wegbewegt.

Öffnet der temperaurabhängige Schalter 10, wie in Fig. 2 gezeigt, so beginnen sich beim Abheben des Kontakttellers 24 von den stationären Kontakten 31, 32 die Lichtbögen 55 auszubilden, die schnell eine Lichtbogenspannung von 10 Volt erreichen. Dadurch wird ein hinreichend hoher und lang andauernder Steuerstrom für das Halbleiterventil 41 erzeugt, der über den Kontaktteller 24, die Feder-Schnappscheibe 21 und das Unterteil 14 in die Steuerleitung 50 fließt und somit zum Zünden des Halbleiterventils 41 führt.

Sobald das Halbleiterventil 41 zündet, also leitend wird, übernimmt es den Laststrom und der temperaturabhängige Schalter 10 wird stromlos, so dass die Lichtbögen 55 erlöschen. Das Halbleiterventil 41 schließt wieder, wenn die Betriebswechselspannung 45 den Nulldurchgang erreicht, also die Polarität wechselt. Während dieser Zeitpanne hat sich der Kontaktteller 24 so weit von den stationären Kontakten 31, 32 entfernt, dass es nicht zu einem Überschlagen und erneutem Ausbilden von Lichtbögen kommt.

Der Selbsthaltewiderstand 37 übernimmt nun einen Reststrom, der den Schalter 10 auch nach dem Abkühlen des Gerätes 46 offen hält.

In Fig. 2 ist noch ein Heizwiderstand 56 gezeigt, der in Reihe zwischen den stationären Kontakt 31 und den Außenanschluss 35, also einen der Verbindungsanschlüsse der Temperaturschutzschaltung 42 geschaltet ist.

Weder der Selbsthaltewiderstand 37 noch der Heizwiderstand 56 beeinträchtigen das erfindungsgemäß genutzte Zusammenwirken von Schalter 10 und Halbleiterventil 41.

Während bei dem Schalter 10 aus Fig. 1 das Unterteil 14 elektrisch leitend ausgebildet ist, kann es auch aus Isoliermaterial gefertigt sein. Damit das Schaltwerk 11 dennoch mit dem Steuereingang 49 verbunden werden kann, ist eine zusätzliche Elektrode erforderlich, die die Verbindung zu dem Schaltwerk 11 herstellt. Dies kann bei der Konstruktion der Fig. 1 eine am Absatz 18 seitlich herausgeführte Lasche sein.

Wenn der Kontaktteller 24 an einem freien Ende einer Bimetallfeder angeordnet ist, kann dies eine Elektrode sein, die mit dem anderen, dem eingespannten Ende der Bimetallfeder verbunden ist.

Die beiden Außenanschlüsse 35 und 36 können auch gleichzeitig als Verbindungsanschlüsse 39 bzw. 40 dienen. Die externen Leitungen 53, 54 können auch durch die Verbindungsleitungen 43 bzw. 44 gebildet werden, die dazu zu dem Gerät 46 und der Wechselspannungsquelle 45 weitergeführt werden.

## Patentansprüche

1. Temperaturschutzschaltung mit zwei elektrischen Verbindungsanschlüssen (39, 40) für ein zu schützendes Gerät (46), mit einem temperaturabhängigen Schalter (10), der ein temperaturabhängiges Schaltwerk (11), zwei stationäre Kontakte (31, 32), die mit den Verbindungsanschlüssen (39, 40) verbunden sind, sowie ein an dem Schaltwerk (11) angeordnetes und von diesem bewegtes Stromübertragungsglied (24; 113) mit zwei elektrisch miteinander verbundenen Gegenkontakten (27, 28) umfasst, die temperaturabhängig mit den beiden stationären Kontakten (31, 32) in Anlage sind und diese dann elektrisch miteinander verbinden, wobei das temperaturabhängige Schaltwerk (11) ein Federteil (21, 22) umfasst, das das Stromübertragungsglied (24) trägt,
**dadurch gekennzeichnet, dass** sie ein steuerbares Halbleiterventil (41) für Wechselspannung mit zwei Stromanschlüssen (47, 48) und einem Steuereingang (49) umfasst, wobei jeder der beiden Stromanschlüsse (47, 48) mit einem der Verbindungsanschlüsse (39, 40) und der Steuereingang (49) zumindest bei geschlossenem temperaturabhängigem Schalter (10) dadurch über das Schaltwerk (11) elektrisch mit den Gegenkontakten (27, 28) an dem Stromübertragungsglied (24) verbunden ist, dass das Federteil (21, 22) elektrisch leitend mit dem Stromübertragungsglied und zumindest bei geschlossenem temperaturabhängigem Schalter (10) elektrisch mit dem Steuereingang (49) verbunden ist.

2. Temperaturschutzschaltung nach Anspruch 1, **dadurch gekennzeichnet, dass** das steuerbare Halbleiterventil (41) nach Art eines Triac (62) arbeitet, vorzugsweise einen Triac (62) umfasst.

3. Temperaturschutzschaltung nach Anspruch 1 oder 2, **dadurch gekennzeichnet, dass** der Schalter (10) ein das Schaltwerk (11) aufnehmendes Gehäuse (12) aufweist, das ein Unterteil (14) sowie ein Oberteil (15) aufweist, an dessen Innenseite (29) die stationären Kontakte (31, 32) angeordnet sind.

4. Temperaturschutzschaltung nach Anspruch 3, **dadurch gekennzeichnet, dass** das Federteil (21, 22) eine Bimetall-Schnappscheibe (22) ist, die sich zumindest bei geschlossenem temperaturabhängigem Schalter (10) an dem Unterteil (14) abstützt.

5. Temperaturschutzschaltung nach Anspruch 3, **dadurch gekennzeichnet, dass** das Federteil (21, 22) eine Feder-Schnappscheibe (21) ist, die sich zumindest bei geschlossenem temperaturabhängigem Schalter (10) an dem Unterteil (14) abstützt, wobei eine Bimetall-Schnappscheibe (22) vorgesehen ist, die das Stromübertragungsglied (24) oberhalb ihrer Schalttemperatur von den stationären Kontakten (31, 32) abhebt.

6. Temperaturschutzschaltung nach Anspruch 4 oder 5, **dadurch gekennzeichnet, dass** das Unterteil (14) elektrisch leitfähig ist.

7. Temperaturschutzschaltung nach Anspruch 6, **dadurch gekennzeichnet, dass** das Federteil (21, 22) permanent elektrisch mit dem Unterteil (14) verbunden ist.

8. Temperaturschutzschaltung nach einem der Ansprüche 1 bis 7, **dadurch gekennzeichnet, dass** zwischen den stationären Kontakten (31, 32) ein Selbsthaltewiderstand (37) angeschlossen ist.

9. Temperaturschutzschaltung nach einem der Ansprüche 1 bis 8, **dadurch gekennzeichnet, dass** zwischen einen (31) der stationären Kontakte (31, 32) und den zugeordneten Verbindungsanschluss (39) ein Heizwiderstand (56) geschaltet ist.

10. Temperaturschutzschaltung nach einem der Ansprüche 1 bis 9, **dadurch gekennzeichnet, dass** das Stromübertragungsglied (24) ein elektrisch leitfähiger Kontaktteller (24) ist, auf dem die beiden Gegenkontakte (27, 28) angeordnet sind, die über den Kontaktteller (24) elektrisch leitend miteinander verbunden sind, wobei der Kontaktteller (24) elektrisch leitend mit dem Schaltwerk (11) verbunden ist.

11. Elektrisches Gerät (46) mit einer Temperaturschutzschaltung nach einem der Ansprüche 1 bis 10.

12. Gerät nach Anspruch 11, **dadurch gekennzeichnet, dass** das Halbleiterventil (41; 62) lösbar mit dem oder jedem temperaturabhängigen Schalter (10; 63, 64) verbunden ist.

13. Gerät nach Anspruch 12, **dadurch gekennzeichnet, dass** das Halbleiterventil (41; 62) über einen Stecker (51) mit dem oder jedem temperaturabhängigen Schalter (10; 63, 64) verbunden ist.

## Claims

1. Thermal protection circuit with two electrical connection terminals (39, 40) for a device (46) to be protected, including a temperature-dependent switch (10) comprising a temperature-dependent switching mechanism (11), two stationary contacts (31, 32) which are connected to the connection terminals (39, 40), and a current transfer element (24; 113), which current transfer element is arranged on the switching mechanism (11), is moved by the switching mechanism and comprises two counter contacts (27, 28), which counter contacts are electrically connected to one another, are in temperature-dependent bearing contact with the two stationary contacts (31, 32) and in this state connect said stationary contacts electrically to one another, wherein the temperature-dependent switching mechanism (11) comprises a spring part (21, 22), which bears the current transfer element (24),
**characterized in that** said thermal protection circuit comprises a controllable semiconductor valve (41) for AC voltage having two current terminals (47, 48) and a control input (49), wherein each of the two current terminals (47, 48) is connected to one of the connection terminals (39, 40), and the control input (49) is electrically connected to the counter contacts (27, 28) at the current transfer element (24) via the switching mechanism (11) at least when the temperature-dependent switch (10) is closed, **in that** said spring part (21, 22) is electrically conductively connected thereto and is electrically connected to the control input (49) at least when the temperature-dependent switch (10) is closed.

2. Thermal protection circuit according to Claim 1, **characterized in that** the controllable semiconductor valve (41) functions in the manner of a triac (62), preferably comprises a triac (62).

3. Thermal protection circuit according to Claim 1 or 2, **characterized in that** the switch (10) has a housing (12), which accommodates the switching mechanism (11) and has a lower part (14) and an upper part (15), with the stationary contacts (31, 32) being arranged on the inner side (29) of said upper part.

4. Thermal protection circuit according to Claim 3, **characterized in that** the spring part (21, 22) is a bimetallic snap-action disc (22), which is supported on the lower part (14) at least when the temperature-dependent switch (10) is closed.

5. Thermal protection circuit according to Claim 3, **characterized in that** the spring part (21, 22) is a spring snap-action disc (21), which is supported on the lower part (14) at least when the temperature-dependent switch (10) is closed, wherein a bimetallic snap-action disc (22) is provided which lifts off the current transfer element (24) from the stationary contacts (31, 32) above the switching temperature of said bimetallic snap-action disc.

6. Thermal protection circuit according to Claim 4 or 5, **characterized in that** the lower part (14) is electrically conductive.

7. Thermal protection circuit according to Claim 6, **characterized in that** the spring part (21, 22) is permanently electrically connected to the lower part (14).

8. Thermal protection circuit according to anyone of Claims 1 to 7, **characterized in that** a self-holding resistor (37) is connected between the stationary contacts (31, 32).

9. Thermal protection circuit according to anyone of Claims 1 to 8, **characterized in that** a heating resistor (56) is connected between one (31) of the stationary contacts (31, 32) and the associated connection terminal (39).

10. Thermal protection circuit according to anyone of Claims 1 to 9, **characterized in that** the current transfer element (24) is an electrically conductive contact plate (24), on which the two counter contacts (27, 28) are arranged, which counter contacts are electrically conductively connected to one another via the contact plate (24), wherein the contact plate (24) is electrically conductively connected to the switching mechanism (11).

11. Electrical device (46) comprising a thermal protection circuit according to anyone of claims 1 to 10.

12. Device according to claim 11, **characterized in that** said semiconductor valve (41; 62) is connected to the or to each temperature-dependent switch (10; 63, 64) in releasable manner.

13. Device according to claim 12, **characterized in that** said semiconductor valve (41; 62) is connected to the or to each temperature-dependent switch (10; 63, 64) via a plug (51).

## Revendications

1. Circuit de protection contre les hautes températures comprenant deux bornes de connexion électriques (39, 40) pour un appareil (46) à protéger, un commutateur thermosensible (10), qui comporte un dispositif de commutation thermosensible (11), deux contacts fixes (31, 32), qui sont reliés aux bornes de connexion (39, 40), ainsi qu'un organe de transmission de courant (24 ; 113) comprenant deux contacts complémentaires (27, 28) reliés électriquement l'un à l'autre, et disposé sur le dispositif de commutation (11) et déplacé par ce dernier les contact complémentaires étant en appui avec les deux contacts fixes (31, 32) de manière thermosensible et relient alors ces derniers l'un à l'autre de manière électrique, le dispositif de commutation thermosensible (11) comprenant une partie à ressort (21, 22) qui porte l'organe de transmission de courant (24),
**caractérisé en ce qu'**il comporte une valve à semi-conducteur (41) pouvant être commandée pour tension alternative comprenant deux prises de courant (47, 48) et une entrée de commande (49), chacune des deux prises de courant (47, 48) étant reliée à l'une des bornes de connexion (39, 40) et à l'entrée de commande (49) au moins lorsque le commutateur thermosensible (10) est fermé, par l'intermédiaire du dispositif de commutation (11) électriquement aux contacts complémentaires (27, 28) sur l'organe de transmission de courant (24), par le fait que la partie à ressort (21, 22) est reliée de manière électro-conductrice à l'organe de transmission de courant et électriquement à l'entrée de commande (49) au moins lorsque le commutateur thermosensible (10) est fermé.

2. Circuit de protection contre les hautes températures selon la revendication 1, **caractérisé en ce que** la valve à semi-conducteur (41) pouvant être commandée fonctionne à la façon d'un triac (62), de préférence comporte un triac (62).

3. Circuit de protection contre les hautes températures selon la revendication 1 ou 2, **caractérisé en ce que** le commutateur (10) comprend un boîtier (12) qui loge le dispositif de commutation (11) et qui comprend une partie inférieure (14) ainsi qu'une partie supérieure (15), sur la face intérieure (29) de laquelle sont disposés les contacts fixes (31, 32).

4. Circuit de protection contre les hautes températures selon la revendication 3, **caractérisé en ce que** la partie à ressort (21, 22) est un disque à déclic bimétallique (22), qui s'appuie sur la partie inférieure (14) au moins lorsque le commutateur thermosensible (10) est fermé.

5. Circuit de protection contre les hautes températures selon la revendication 3, **caractérisé en ce que** la partie à ressort (21, 22) est un disque à déclic à ressort (21), qui s'appuie sur la partie inférieure (14) au moins lorsque le commutateur thermosensible (10) est fermé, un disque à déclic bimétallique (22) étant prévu, qui soulève l'organe de transmission de courant (24) des contacts fixes (31, 32) au-dessus de sa température de commutation.

6. Circuit de protection contre les hautes températures selon la revendication 4 ou 5, **caractérisé en ce que** la partie inférieure (14) est électro-conductrice.

7. Circuit de protection contre les hautes températures selon la revendication 6, **caractérisé en ce que** la partie à ressort (21, 22) est reliée en permanence électriquement à la partie inférieure (14).

8. Circuit de protection contre les hautes températures selon l'une quelconque des revendications 1 à 7, **caractérisé en ce qu'**une résistance de maintien (37) est raccordée entre les contacts fixes (31, 32).

9. Circuit de protection contre les hautes températures selon l'une quelconque des revendications 1 à 8, **caractérisé en ce qu'**une résistance chauffante (56) est montée entre l'un (31) des contacts fixes (31, 32) et la borne de connexion (39) associée.

10. Circuit de protection contre les hautes températures selon l'une quelconque des revendications 1 à 9, **caractérisé en ce que** l'organe de transmission de courant (24) est une rondelle de contact (24) électro-conductrice sur laquelle les deux contacts complémentaires (27, 28) sont disposés, qui sont reliés l'un à l'autre de manière électro-conductrice par l'intermédiaire de la rondelle de contact (24), la rondelle de contact (24) étant reliée de manière électro-conductrice au dispositif de commutation (11).

11. Appareil électrique (46) comprenant un circuit de protection contre les hautes températures selon l'une quelconque des revendications 1 à 10.

12. Appareil selon la revendication 11, **caractérisé en ce que** la valve à semi-conducteur (41 ; 62) est reliée de manière détachable au ou à chaque commutateur thermosensible (10 ; 63, 64).

13. Appareil selon la revendication 12, **caractérisé en ce que** la valve à semi-conducteur (41 ; 62) est reliée au ou à chaque commutateur thermosensible (10 ; 63, 64) par l'intermédiaire d'un connecteur (51).
